# FASCICULE DE BREVET EUROPEEN

(11) **EP 0 479 654 B1**
(45) Date de publication et mention de la délivrance du brevet: **13.12.1995**
(21) Numéro de dépôt: 91402577.0
(22) Date de dépôt: 26.09.1991
(51) Int. Cl.: F16F 13/00

(54) **Perfectionnements aux manchons antivibratoires hydrauliques et aux ensembles d'amortissement équipés de tels manchons**
Verbesserungen zu hydraulischen Antischwingungsbuchsen und mit solchen Buchsen ausgestatteten dämpfenden Einrichtungen
Improvements to hydraulic anti-vibration bushings and to damping arrangements using such bushings

(30) Priorité: 01.10.1990 FR 9012069
(43) Date de publication de la demande: 08.04.1992
(73) Titulaire: HUTCHINSON, F-75384 Paris Cédex 08 (FR)
(72) Inventeur: Gennesseaux, André, F-45120 Chalette sur Loing (FR)
(74) Mandataire: Burbaud, Eric

(56) Documents cités:
- EP-A- 0 385 463
- EP-A- 0 415 257
- FR-A- 2 599 799

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur ou un train de suspension de ce véhicule.

Elle vise également les ensembles d'amortissement équipés de tels dispositifs.

Elle concerne plus particulièrement les cas où les dispositifs en question comportent :
- deux armatures rigides solidarisables respectivement avec les deux éléments rigides à réunir,
- un corps d'entretoisement en élastomère reliant entre elles les deux armatures et formant au moins en partie avec celles-ci deux chambres étanches, lesquelles sont déformables en sens inverses lorsqu'une des deux armatures se déplace par rapport à l'autre selon une direction E,
- un passage étranglé faisant communiquer en permanence les deux chambres entre elles,
- une masse de liquide remplissant les deux chambres et le passage étranglé,
- et un clapet rigide délimitant en partie l'une des deux chambres et monté de façon à pouvoir se déplacer avec une amplitude de débattement limitée.

Comme on le sait, avec un tel dispositif :
- lorsque des oscillations de relativement grande amplitude (savoir supérieure à 0,5 mm) et de relativement basse fréquence (savoir de l'ordre de 5 à 15 Hz) telles que celles dues au "hachis" engendré sur le véhicule par les cahots de la route sont appliquées selon la direction E sur l'une des deux armatures, le liquide de l'une des deux chambres est refoulé dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- lorsque des vibrations de relativement petite amplitude (inférieure à 0,5 mm) et de relativement haute fréquence (généralement comprise entre 20 et 200 Hz), telles que celles dues au fonctionnement d'un moteur de véhicule sont appliquées sur l'une des deux armatures, le clapet est le siège de vibrations aptes à atténuer ou filtrer la transmission des vibrations en cause.

Dans les modes de réalisation connus des dispositifs du genre en question, le clapet est généralement libre de se déplacer entre ses deux butées et ce sont donc les vibrations auxquelles il est soumis naturellement en fonction des vibrations à amortir qui sont exploitées aux fins d'atténuation désirées.

Pour renforcer cet effet atténuateur ou filtrant, on a déjà envisagé de supprimer le caractère "naturel" des vibrations utiles et exploitables du clapet en les modifiant d'une façon artificielle et imposée, méthode parfois désignée sous l' appellation "atténuation active".

A cet effet, il a été proposé de constituer au moins partiellement le clapet par un élément ferromagnétique, et d'appliquer sur cet élément, à l'aide de bobines électriques, des "contre-vibrations", c'est-à-dire des efforts alternatifs de même fréquence que les vibrations à réduire, orientés selon la même direction que ces vibrations et de sens contraire, l'intervalle ou entrefer compris entre le clapet et les bobines étant séparé du liquide amortisseur par au moins un joint annulaire étanche.

Dans les modes de réalisation connus de ces dispositifs, l'ensemble du dispositif est en général de révolution autour d'un axe qui est parallèle à la direction E de débattement du clapet et de déformation du corps en élastomère (voir le document FR-A-2 599 799 qui montre les caractéristiques du préambule de la revendication 1).

L'invention a pour but d'étendre le bénéfice de l'atténuation active ci-dessus définie à des dispositifs antivibratoires hydrauliques du type des manchons, c'est-à-dire pour lesquels les armatures sont encore de révolution autour d'un axe, mais sont ici tubulaires et s'entourent mutuellement, la direction E de débattement du clapet et de déformation du corps en élastomère étant alors diamétrale.

Plus précisément, les manchons auxquels se rapporte l'invention sont destinés à amortir le transfert, à l'une des deux armatures tubulaires, des oscillations ou vibrations appliquées sur l'autre armature, non pas selon une seule direction diamétrale E, mais selon l'une ou l'autre de deux directions diamétrales distinctes, à savoir la direction E et une autre direction diamétrale F, de préférence perpendiculaire à la direction E.

A cet effet, les dispositifs du genre en question selon l'invention mettent encore en application les différentes dispositions explicitées ci-dessus, et ils sont caractérisés en ce que leurs armatures sont tubulaires et s'entourent mutuellement, en ce que leur clapet est constitué par une bague de révolution montée flottante selon toutes les directions transversales, mais non axialement, le long de l'une des deux armatures tubulaires, dite ci-après première armature, dont elle est séparée radialement par l'entrefer, alors cylindrique, en ce qu'au moins trois chambres étanches sont formées entre le corps d'entretoisement en élastomère et la bague, chambres réparties circulairement autour de l'axe de la deuxième armature et reliées entre elles par des passages étranglés de façon telle que l'on observe des refoulements alternatifs de liquide dans au moins un tel passage pour chacune de deux directions diamétrales distinctes de travail E et F, en ce que les pôles des bobines électriques sont répartis circonférentiellement sur la face, de la première armature, qui délimite en partie l'entrefer de façon telle que l'excitation de certaines de ces bobines ait pour effet d'imposer à la bague des déplacements de va-et-vient selon la direction E par rapport à la première armature et que l'excitation des autres bobines ait pour effet d'imposer à ladite bague des déplacements de va-et-vient selon la direction F par rapport à la première armature, et en ce qu'il est prévu des capteurs disposés à proximité immédiate du clapet, propres à capter les déplacements dudit clapet selon respectivement les deux directions E et F, et des moyens pour asservir aux sorties desdits capteurs les excitations des bobines associées respectivement à ces deux directions.

Dans des modes de réalisation préférés, on a recours en outre à l'une et/ou à l'autre des dispositions suivantes :
- la première armature tubulaire est l'armature externe,
- le nombre des chambres étanches est égal à 4, réparties angulairement à 90° autour de l'axe de la deuxième armature,
- dans un manchon selon l'alinéa précédent, les passages étranglés relient respectivement deux à deux les chambres diamétralement opposées,
- dans un manchon selon l'alinéa précédent, les passages étranglés relient deux à deux les chambres angulairement contiguës et sont localisés entre le corps d'entretoisement en élastomère et la face en regard de la bague,
- la pièce polaire dans laquelle sont créés les pôles est constituée par un empilage axial de rondelles identiques en matériau ferromagnétique dentées intérieurement,
- la bague comprend un empilage axial de rondelles ferromagnétiques identiques, empilage lui-même enrolé, à l'exception de sa face annulaire contiguë à l'entrefer, par un corps rigide en matériau amagnétique,
- l'étanchéité vis-à-vis du liquide entre la bague et les faces planes transversales en regard de son guide est assurée à l'aide de joints annulaires admettant pour axe l'axe de la bague et logés dans des gorges annulaires évidées dans les faces frontales de cette bague.

Pour ce qui est des ensembles équipés des manchons ci-dessus définis, ils sont essentiellement caractérisés selon l'invention en ce qu'ils comportent des moyens d'asservissement dédoublés permettant d'assurer une atténuation active de vibrations selon chacune des deux directions E et F, moyens comprenant des capteurs des déplacements de la bague selon respectivement ces deux directions, capteurs disposés à proximité immédiate de cette bague, et des chaînes asservissant au moins en partie aux déplacements détectés les excitations des bobines concernées aux fins d'atténuation active de ces déplacements.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent respectivement en coupe transversale selon I-I, figure 2, et en coupe axiale selon II-II, figure 1, un manchon antivibratoire hydraulique établi selon l'invention.

La figure 3 montre schématiquement une portion d'un ensemble établi selon l'invention pour commander un tel manchon.

La figure 4 montre semblablement à la figure 2 une variante de manchon antivibratoire hydraulique conforme à l'invention.

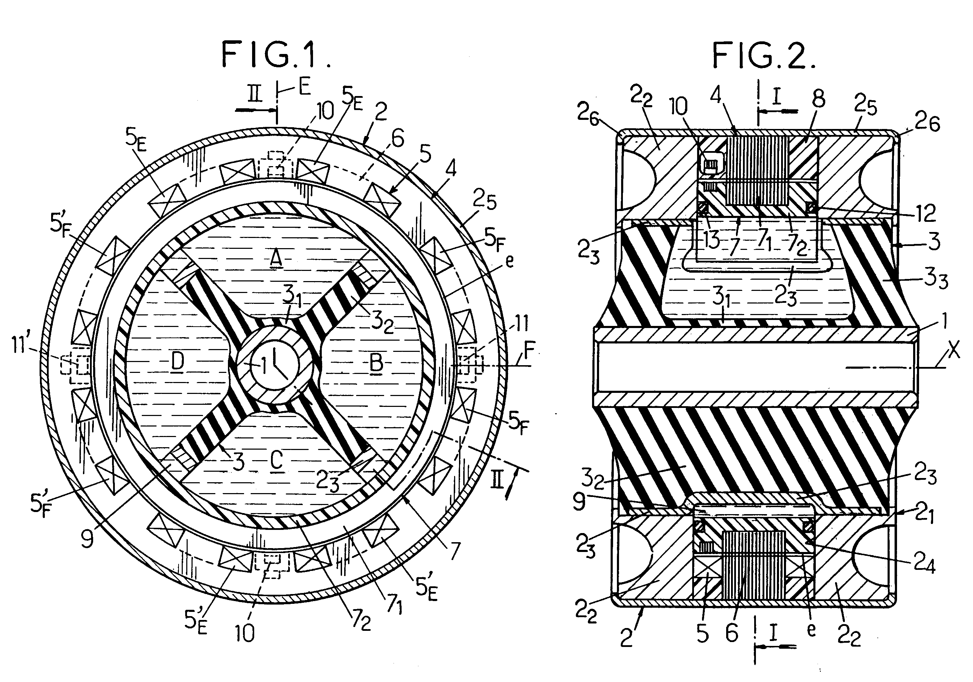

Le manchon montré sur les figures 1 et 2 comprend :
- une armature tubulaire rigide centrale 1 d'axe X,
- une armature rigide tubulaire 2 entourant l'armature 1 et qui, au moins sous charge, est coaxiale à l'armature 1,
- et un corps d'entretoisement 3 en élastomère reliant entre elles les deux armatures 1 et 2 et étant adhéré sur chacune d'elles.

L'armature tubulaire centrale ou interne 1 est constituée par un simple tronçon de tube métallique.

L'armature enveloppante ou externe 2 comprend :
- un corps annulaire 2₁ constitué de préférence en alliage léger, corps lui-même composé de deux anneaux 2₂ présentant une demi-section axiale carrée et d'une cage intérieure 2₃ entourée jointivement à ses extrémités par les anneaux et comportant quatre barreaux ou pontets longitudinaux, les deux anneaux définissant entre eux un logement annulaire délimité axialement par deux faces planes transversales 2₄,
- et une douille cylindrique 2₅ coiffant jointivement les deux anneaux 2₂.

Le corps en élastomère 3 présente :
- un fourreau mince 3₁ rapporté autour de l'armature tubulaire interne 1,
- quatre cloisons plates radiales 3₂ inclinées de 90° les unes sur les autres autour de l'axe X et s'étendant chacune entre le fourreau 3₁ et l'un des pontets 2₃,
- et deux cloisons transversales terminales 3₃ en forme de disques ou troncs de cône peu inclinés reliant chacune une extrémité axiale de l'armature tubulaire interne 1 à l'un des deux anneaux 2₂.

Si l'on considère le plan transversal de la figure 1, on appellera dans ce qui suit E et F les directions des bissectrices des angles définis par les intersections, avec ledit plan, des plans moyens des cloisons 3₂ : comme ces cloisons 3₂ sont ici perpendiculaires entre elles, il en est de même des directions E et F.

Dans le logement annulaire délimité extérieurement par la douille 2₅ et axialement par les faces 2₄, on dispose :
- d'une part, juxtaposée extérieurement contre ladite douille et axialement contre les anneaux 2₂, une pièce polaire fixe 4 comprenant une couronne de bobines électriques 5 entourant chacune un noyau 6 formant un pôle magnétique orienté radialement vers l'axe X,
- et, d'autre part, une bague (ou fourreau) magnétique 7 disposée à l'intérieur de la pièce polaire 4 de façon à pouvoir flotter par rapport à cette pièce selon toutes les directions transversales ou radiales possibles mais non axialement.

La valeur moyenne du jeu radial ou entrefer e compris entre la bague 7 et la pièce polaire 4 qui l'entoure est en général comprise entre 0,1 et 1 mm.

Le guidage des flottements transversaux de la bague 7 est assuré par glissement jointif des faces frontales de celles-ci contre les faces en regard 2₄ des anneaux 2₂.

Les extrémités 2₆ de la douille 2₅ sont rabattues intérieurement sur les bords des anneaux 2₂ de façon à assembler par un effet de sertissage l'ensemble des pièces fixes axialement juxtaposées 2₂ et 4.

Dans le mode de réalisation préféré illustré, la pièce polaire 4 comprend dans sa zone médiane axiale un empilement de rondelles en matériau magnétique qui sont dentées intérieurement, et ce sont les empilements des dents qui forment les noyaux 6 entourés par les bobines 5 : le feuilletage ainsi obtenu réduit les pertes magnétiques.

L'empilage magnétique est lui-même bordé axialement par deux pièces annulaires 8 en matière plastique juxtaposées contre les anneaux 2₂ le long de leurs faces 2₄.

Pour ce qui est de la bague 7, elle comprend aussi une zone centrale magnétique feuilletée, c'est-à-dire composée d'un empilage axial de rondelles 7₁ en matériau magnétique, empilage enrobé de toutes parts, sauf sur sa face extérieure délimitant le jeu e constituant entrefer, par un corps annulaire 7₂ en matière plastique rigide.

La face cylindrique intérieure de la bague 7 définit avec les cloisons 3₂ constitutives du corps en élastomère 3 quatre chambres ou poches A,B,C et D décalées angulairement entre elles de 90° autour de l'axe X.

Ces poches communiquent entre elles de proche en proche par des canaux étranglés 9 qui sont réservés entre les pontets 2₃ et la face intérieure de la bague 7.

Les différentes poches A,B,C,D ainsi que les passages étranglés 9 qui les relient sont remplis d'un liquide amortisseur.

On voit encore sur les figures quatre capteurs 10,10′,11 et 11′ solidaires de la pièce polaire 4, propres à détecter les déplacements de la bague 7 respectivement selon les deux directions E et F.

A cet effet ces capteurs sont ici disposés dans l'une des pièces annulaires 8, dans des portions de ces pièces, qui sont contiguës à l'entrefer e et deux à deux diamétralement opposées selon les directions E et F, les deux capteurs 10,10′ étant affectés à la direction E et les deux capteurs 11,11′ à la direction F.

L'étanchéité de l'entrefer e par rapport au liquide est assurée à l'aide de joints d'étanchéité annulaires 12 logés dans des gorges annulaires 13 évidées respectivement dans les faces frontales du corps annulaire 7₂ : de la sorte, lesdits joints 12 prennent appui contre les faces 2₄ des anneaux 2₂.

Dans les modes de réalisation auxquels l'invention s'applique de préférence et qui seront choisis à titre d'exemples non limitatifs pour le présent exposé, l'une des deux armatures 1 et 2 est montée sur le châssis d'un véhicule et l'autre est liée à l'un des trains de suspension de ce véhicule ou au moteur à combustion interne de celui-ci.

Les oscillations de relativement basse fréquence et grande amplitude qui sont appliquées à l'une des armatures 1 et 2 selon la direction E se traduisent par un refoulement alernatif à la même fréquence du liquide contenu dans la poche A vers la poche C, à travers les poches B et D et les passages étranglés 9, et inversement, et les colonnes de liquide oscillantes contenues dans lesdits passages sont le siège de phénomènes de résonance lorsque ladite fréquence atteint une valeur prédéterminée qui dépend des cotes dudit passage, ce phénomène ayant pour effet d'amortir la transmission des oscillations d'origine d'une armature à l'autre.

Si les oscillations appliquées sur l'une des armatures par rapport à l'autre présentent une relativement haute fréquence et une relativement faible amplitude, s'apparentant alors à des vibrations, la transmission de ces vibrations entre les deux armatures est absorbée ou amortie au moins partiellement par mise en vibration naturelle de la bague 7.

Ce sont des vibrations de ce type qu'il a été proposé de faire contrôler artificiellement dans le document mentionné ci-dessus par commande électrique.

Mais dans ce document les vibrations naturelles du clapet qui tenait alors lieu de bague se produisaient selon une direction unique et il en était de même des contre-vibrations artificiellement appliquées sur ce clapet.

Dans le cas présent, la bague 7 peut être animée de vibrations naturelles selon l'une et/ou l'autre des deux directions E et F et les moyens de contrôle électrique ici prévus permettent d'imposer à ladite bague des vibrations artificielles selon l'une et/ou l'autre de ces deux directions E et F.

A cet effet, ces moyens de contrôle sont doublés par rapport aux précédents et comprennent deux chaînes d'asservissement semblables affectées chacune à l'une des deux directions E et F et exploitant chacune les informations provenant de l'une des deux paires de capteurs de déplacement 10,10′ ou 11,11′.

Dans le mode de réalisation schématisé sur la figure 1, les bobines 5 sont au nombre de huit, réparties uniformément autour de l'axe X, de sorte que chaque capteur est encadré angulairement par deux bobines, savoir, respectivement :
- les deux bobines 5_{E} pour le capteur 10,
- les deux bobines 5′_{E} pour le capteur 10′,
- les deux bobines 5_{F} pour le capteur 11,
- et les deux bobines 5′_{F} pour le capteur 11′.

Il est à noter que les efforts magnétiques appliqués sur la bague 7 par les deux bobines qui encadrent un capteur donné ont une résultante orientée selon la direction E ou F à laquelle est affecté ce capteur.

Il est à noter également que toute force orientée transversalement, c'est-à-dire dans un plan perpendiculaire à l'axe X, mais selon une direction différente des directions E et F, peut être considérée comme la résultante de deux composantes orientées respectivement selon ces deux directions E et F.

Par conséquent la maîtrise des vibrations selon les deux directions E et F permet une maîtrise de toutes les vibrations engendrées selon d'autres directions transversales.

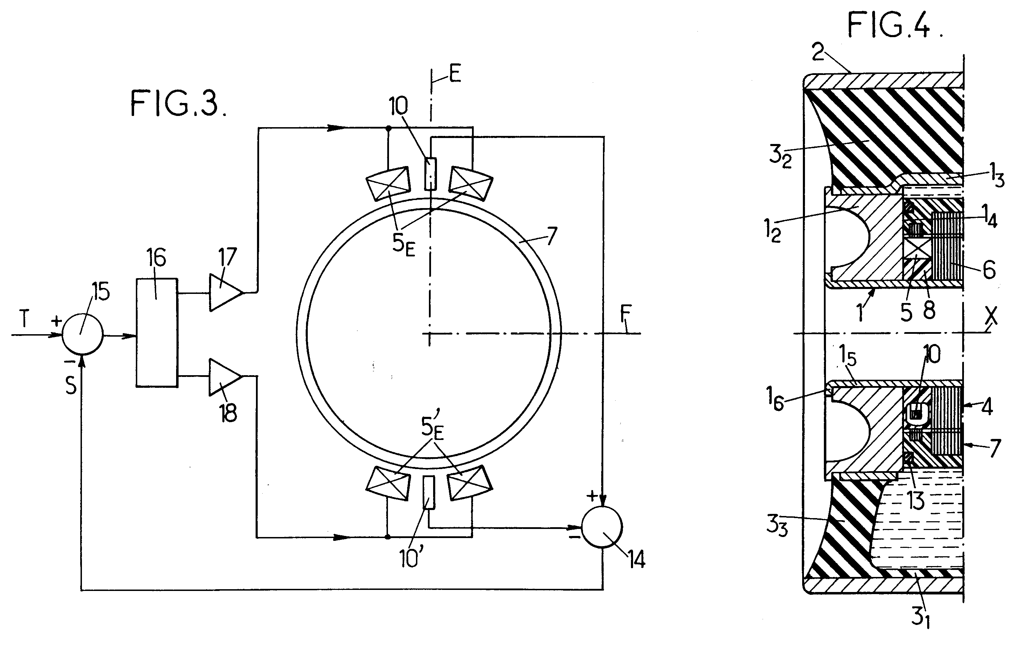

Comme les deux chaînes d'asservissement affectées respectivement aux deux directions E et F sont semblables, il suffit d'en décrire une ici et c'est ce qui va être fait en référence à la figure 3.

La chaîne en question comprend, en plus des paires de bobines 5_{E} et 5′_{E} ainsi que des capteurs 10 et 10′ des déplacements de la bague 7 selon la direction E :
- un circuit soustracteur 14 alimenté par les sorties des deux capteurs 10 et 10′ et donc apte à élaborer un signal S représentatif des déplacements de la bague 7 selon la direction E,
- un second circuit soustracteur 15 propre à recevoir, d'une part, le signal S et, d'autre part, un signal extérieur T de correction,
- un circuit électronique 16 de traitement des données émises par le circuit soustracteur 15,
- et deux amplificateurs 17 et 18 interposés respectivement entre le circuit 16 et chacune des paires de bobines 5_{E} et 5′_{E}.

Le signal correcteur T est engendré dans des circuits extérieurs quine font pas partie de la présente invention et qui tiennent compte notamment des vibrations réelles auxquelles sont soumises les deux armatures tubulaires 1 et 2 ainsi qu'éventuellement de la fréquence instantanée des vibrations du moteur du véhicule équipé du manchon concerné.

L'asservissement réalisé par la chaîne est généralement prévu de façon telle que, s'il est utilisé isolement, il immobilise pratiquement la bague 7, toute tentative de déplacement de celle-ci dans une direction donnée se traduisant instantanément par application sur elle d'une force antagoniste contraire tendant à interdire ce déplacement.

C'est sur la bague ainsi asservie en position qu'il est avantageux d'appliquer artificiellement des vibrations correctrices ou "contre-vibrations".

Les caractéristiques (fréquence, amplitude, phase) de ces contre-vibrations peuvent être identiques à celles des vibrations naturelles de la bague qui auraient lieu en l'absence de tout asservissement.

On obtient dans ce cas des effets d'amortisseur ment du même genre que ceux obtenus par lesdites vibrations naturelles.

Mais ici ces vibrations sont imposées sur la bague 7 en maintenant cette dernière écartée de ses butées de sorte qu'elle ne risque plus de venir porter contre celles-ci, l'amplitude desdites vibrations étant constamment inférieure au jeu des débattements, c'est-à-dire à l'épaisseur de l'entrefer e : l'amplitude des vibrations considérées est par exemple de l'ordre de 0,1 mm si ladite épaisseur est de l'ordre de 0,5 mm.

En particulier, il n'y a plus de risque que les vibrations considérées cessent au rythme d'éventuelles oscillations à basse fréquence et grande amplitude.

Cela dit, l'asservissement considéré permet d'appliquer sur la bague 7 des vibrations encore plus correctrices que les vibrations naturelles précédemment évoquées, en particulier en conférant à ces vibrations correctrices des amplitudes supérieures à celles desdites vibrations naturelles, mais toujours inférieures bien entendu au jeu ci-dessus défini.

L'ensemble permet alors d'engendrer une "atténuation active" des vibrations à amortir, ce qui permet à la limite de supprimer intégralement celles-ci au niveau de l'armature tubulaire liée au châssis du véhicule.

Les différentes bobines 5 travaillent à la façon de moteurs à réductance variable, engendrant sur la bague des forces élevées orientées alternativement dans deux sens opposés.

Les capteurs 10,10′,11,11′ sont constitués de toute manière désirable, travaillant par exemple sur le principe LVDT ("Linear Variation Differential Transformer") ou étant d'un type inductif, capacitif ou à courants de Foucault.

En suite de quoi, et quel que soit le mode de réalisation adopté, on dispose finalement d'un manchon antivibratoire hydraulique dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:
- celles où les liaisons entre les chambres A,B,C,D par les passages étranglés 9 seraient réalisées de façon à faire communiquer entre elles deux à deux les chambres diamétralement opposées (ici A et C ou bien B et D) et non pas les chambres angulairement contiguës comme illustré sur la figure 1, des mesures étant alors prises, bien entendu, pour assurer l'étanchéité entre les pontets 2₃ et la bague 7 tout en autorisant les vibrations de cette bague,
- celles où le nombre des chambres délimitées entre le corps en élastomère 3 et la face interne de la bague 7 serait différent de quatre et notamment égal à trois, lesdites chambres étant notamment, dans ce dernier cas identiques entre elles et décalées angulairement de 120° autour de l'axe X.
- celles où les joints d'étanchéité annulaires assurant l'étanchéité de l'entrefer e tout en permettant les déplacements de la bague 7 seraient logées dans les anneaux 2₂ au lieu de l'être dans ladite bague 7 elle-même,
- et celles où l'armature le long de laquelle serait montée transversalement flottante la bague 7 serait l'armature interne 1 au lieu d'être l'armature externe 2, ainsi qu'il a été illustré sur la figure 4, les bobines électriques 5 génératrices des efforts de compensation étant alors portées aussi par ladite armature interne, à l'intérieur de la bague 7 et les chambres à liquide étant alors formées à l'extérieur de cette bague, les constructions précédentes des deux armatures 1 et 2 étant ici permutées en ce sens que c'est ici l'armature interne 1 qui est composée de deux anneaux 1₂ entourés par les extrémités d'une cage 1₃ et sertis axialement contre une couronne de pôles (4,5,6,8) centrale par rabattement vers l'extérieur des bords 1₆ d'une douille intérieure 1₅, les deux anneaux 1₂ définissant encore axialement entre eux un logement annulaire, délimité axialement par deux faces planes transversales 1₄, pour la bague 7.

## Revendications

1. Dispositif antivibratoire hydraulique destiné à être interposé entre deux éléments rigides, comportant deux armatures rigides (1, 2) solidarisables respectivement avec les deux éléments rigides ; un corps d'entretoisement en élastomère (3) reliant entre elles les deux armatures et formant au moins en partie avec celles-ci deux chambres étanches (A, B) ; un passage étranglé (9) faisant communiquer en permanence les deux chambres entre elles ; une masse de liquide remplissant les deux chambres et le passage étranglé ; un clapet rigide (7) délimitant en partie l'une des deux chambres et monté de façon à pouvoir se déplacer selon une direction E avec une amplitude de débattement limitée, clapet constitué au moins partiellement par un élément ferromagnétique ; et des bobines électriques (5) pour appliquer sur cet élément des forces alternatives, l'entrefer (e) compris entre le clapet et les bobines étant séparé du liquide amortisseur par au moins un joint étanche (12), caractérisé en ce que les armatures (1, 2) sont tubulaires et s'entourent mutuellement, en ce que le clapet est constitué par une bague de révolution (7) montée flottante selon toutes les directions transversales, mais non axialement, le long de l'une des deux armatures tubulaires (2 ou 1), dite ci-après première armature, dont elle est séparée radialement par l'entrefer (e), alors cylindrique, en ce qu'au moins trois chambres étanches (A,B,C,D) sont formées entre le corps d'entretoisement en élastomère et la bague, chambres réparties circulairement autour de l'axe de la deuxième armature (1 ou 2) et reliées entre elles par des passages étranglés (9) de façon telle que l'on observe des refoulements alternatifs de liquide dans au moins un tel passage pour chacune de deux directions diamétrales distinctes de travail, à savoir la direction E ci-dessus et une autre direction F, en ce que les pôles des bobines électriques (5_{E},5'_{E},5_{F},5'_{F}) sont répartis circonférentiellement sur la face, de la première armature, qui délimite en partie l'entrefer de façon telle que l'excitation de certaines de ces bobines (5_{E},5'_{E}) ait pour effet d'imposer à la bague (7) des déplacements de va-et-vient selon la direction E par rapport à la première armature et que l'excitation des autres bobines (5_{F},5'_{F}) ait pour effet d'imposer à ladite bague des déplacements de va-et-vient selon la direction F par rapport à ladite première armature, et en ce qu'il est prévu des capteurs (10,11) disposés à proximité immédiate du clapet (7), propres à capter les déplacements dudit clapet selon respectivement les deux directions E et F, et des moyens pour asservir aux sorties desdits capteurs (10,11) les excitations des bobines (5_{E},5'_{E};5_{F},5'_{F}) associées respectivement à ces deux directions (E,F).

2. Manchon selon la revendication 1, caractérisé en ce que la première armature tubulaire est l'armature externe (2).

3. Manchon selon l'une quelconques des revendications 1 et 2, caractérisé en ce que le nombre des chambres étanches est égal à 4, réparties angulairement à 90° autour de l'axe de la deuxième armature (1 ou 2).

4. Manchon selon la revendication 3, caractérisé en ce que les passages étranglés relient respectivement deux à deux les chambres diamétralement opposées (A,C ; B,D).

5. Manchon selon la revendication 3, caractérisé en ce que les passages étranglés relient deux à deux les chambres angulairement contiguës (A,B ; B,C ; C,D ; D,A) et sont localisés entre le corps d'entretoisement en élastomère (3) et la face en regard de la bague (7).

6. Manchon selon l'une quelconque des revendications précédentes, caractérisé en ce que la pièce polaire (4) dans laquelle sont créés les pôles est constituée par un empilage axial de rondelles identiques en matériau ferromagnétique dentées intérieurement.

7. Manchon selon l'une quelconque des précédentes revendications, caractérisé en ce que la bague (7) comprend un empilage axial de rondelles ferromagnétiques identiques (7₁), empilage lui-même enrobé, à l'exception de sa face annulaire contigue à l'entrefer, par un corps rigide en matériau amagnétique (7₂).

8. Manchon selon l'une quelconque des précédentes revendications, caractérisé en ce que l'étanchéité vis-à-vis du liquide entre la bague (7) et les faces planes transversales en regard (2₄) de son guide est assurée à l'aide de joints annulaires (12) admettant pour axe l'axe de la bague et logés dans des gorges annulaires (13) évidées dans les faces frontales de cette bague.

9. Ensemble d'amortissement équipé d'un manchon selon l'une quelconque des précédentes revendications, caractérisé en ce qu'il comporte des moyens d'asservissement dédoublés permettant d'assurer une atténuation active de vibrations selon chacune des deux directions E et F, moyens comprenant des capteurs (10,10',11,11') des déplacements de la bague (7) selon respectivement ces deux directions, capteurs disposés à proximité immédiate de cette bague, et des chaînes (14-18) asservissant au moins en partie aux déplacements détectés les excitations des bobines concernées (5_{E},5'_{E} ou 5_{F},5'_{F}) aux fins d'atténuation active de ces déplacements.

## Claims

1. An hydraulic vibration-free device intended to be interposed between two rigid elements, comprising two rigid strength members (1, 2) able to be solidly connected to the two rigid elements respectively; a cross-brace body (3) made of elastomer connecting together the two strength members and forming, at least partially, with the latter two fluid-tight chambers (A, B); a restricted passage (9) causing the two chambers to be permanently in communication with each other; a liquid mass filling the two chambers and the restricted passage; a rigid flap (7) delimiting in part one of the two chambers and mounted in such a manner as to be able to move along a direction E with a limited flap movement amplitude, which flap is constituted, at least partially, by a ferromagnetic element; and electrical coils (5) for applying alternating forces to this element, the air-gap (e) between the flap and the coils being separated from the damping liquid by at least one fluid-tight annular seal (12), characterized in that the strength members (1, 2) are tubular and surround each other, in that the flap is constituted by a ring of revolution (7) mounted so as to wobble in all transverse directions, but not axially, along one of the two tubular strength members (2 or 1), referred to hereinbelow as first strength member, from which it is radially separated by the air-gap (e), in this case cylindrical, in that at least three fluid-tight chambers (A, B, C, D) are formed between the cross-brace body made of elastomer and the ring, which chambers are circularly distributed around the axis of the second strength member (1 or 2) and are connected together by restricted passages (9) in such a manner that there are observed alternating displacements of liquid in at least one such passage for each of two separate diametrical working directions, namely the direction E hereinabove and another direction F, in that the poles of the electrical coils (5_{E}, 5'_{E}, 5_{F}, 5'_{F}) are circumferentially distributed over the face, of the first strength member, which delimits in part the air-gap in such a way that the excitation of some of these coils (5_{E},5'_{E}) has the effect of imposing on the ring (7) to and fro movements along the direction E with respect to the first strength member and such that the excitation of the other coils (5_{F}, 5'_{F}) has the effect of imposing on said ring to and fro movements along the direction F with respect to said first strength member, and in that sensors (10, 11) are arranged in the immediate proximity of the flap (7), able to detect the displacements of said flap along respectively the both directions E and F, means being provided for servo-controlling to the ouputs of said sensors (10, 11) the excitations of the coils (5_{E}, 5'_{E} ; 5_{F}, 5'_{F}) which are respectively assigned to these both directions (E,F).

2. The sleeve as claimed in claim 1, characterized in that the first tubular strength member is the external strength member (2).

3. The sleeve as claimed in either of claims 1 and 2, characterized in that the number of fluid-tight chambers is equal to 4, angularly distributed at 90° about the axis of the second strength member (1 or 2).

4. The sleeve as claimed in claim 3, characterized in that the restricted passages connect in pairs the diametrically opposed chambers (A, C: B, D), respectively.

5. The sleeve as claimed in claim 3, characterized in that the restricted passages connect in pairs the angularly contiguous chambers (A, B; B, C, D; D, A) and are located between the cross-brace body (3) made of elastomer and the face opposite the ring (7).

6. The sleeve as claimed in any of the previous claims, characterized in that the polar part (4) in which the poles are created is constituted by an axial stack of identical washers made of ferromagnetic material and which are toothed on the inside.

7. The sleeve as claimed in any of the preceding claims, characterized in that the ring (7) comprises an axial stack of identical ferromagnetic washers (7₁), which stack is itself clad, with the exception of its annular face contiguous with the air-gap, with a rigid body (7₂) made of non-magnetic material.

8. The sleeve as claimed in any of the previous claims, characterized in that the fluid-tightness between the ring (7) and the transverse plane faces (2₄) opposite its guide is ensured with the aid of annular seals (12) having for an axis the axis of the ring and housed in annular grooves (13) hollowed out in the frontal faces of this ring.

9. A damping assembly equipped with a sleeve as claimed in any of the previous claims, characterized in that it comprises undoubled servo-control means enabling vibrations in both directions E and F to be actively attenuated, which means comprise sensors (10, 10', 11, 11') of the movements of the ring (7) in these two directions, respectively, which sensors are arranged in the immediate proximity of this ring and systems (14-18) servo-controlling, at least partially, the excitations of the coils in question (5_{E}, 5'_{E} or 5_{F}, 5'_{F}) to the detected movements in order to actively attenuate these movements.

## Patentansprüche

1. Hydraulische Antischwingungsvorrichtung zum Einbau zwischen zwei starren Elementen, die aus folgenden Teilen besteht: zwei starren Armaturen (1, 2), die an jeweils einem der beiden starren Elemente anbringbar ist, einem Verbindongskörper (3) aus elastomerem Material, der die beiden Armaturen miteinander verbindet und mit diesen wenigstens teilweise zwei dichte Kammern (A, B) bildet, einem verengten Durchgang (9), der die beiden Kammern dauernd miteinander verbindet, einer flüssigen Masse, die die beiden Kammern und den verengten Durchgang ausfüllt, einem starren Ventil (7), das die eine der beiden Kammern teilweise begrenzt und so befestigt ist, daß es sichin einer Richtung E mit einer begrenzten Schwingungsamplitude verschieben kann, wobei das Ventil wenigstens teilweise aus einem ferromagnetischen Element besteht, und elektrischen Wicklungen (5), mit denen an dieses Element Wechselkräften anlegbar sind, wobei der Luftspalt (e), der zwischen dem Ventil und den Wicklungen vorhanden ist, von der Dämpfungsflüssigkeit durch wenigstens eine dichte Abdichtung (12) getrennt ist, dadurch gekennzeichnet, daß die Armaturen (1, 2) rohrförmig ausgebildet sind und die eine Armatur die andere umgibt, daß das Ventil aus einem umdrehungszylindrischen Ring (7) besteht, der schwimmend in allen Querrichtungen aber nicht in axialer Richtung längs einer der beiden rohrförmigen Armaturen (2 oder 1), die nachfolgend als erste Armatur bezeichnet ist, befestigt ist, von der der Ring radial durch einen Luftspalt (e), der dann zylindrisch ist, getrennt ist, daß wenigstens drei dichte Kammern (A, B, C, D) zwischen dem Verbindungskörper aus elastomerem Material und dem Ring ausgebildet sind, wobei die Kammern kreisförmig um die Achse der zweiten Armatur (1 oder 2) angeordnet und miteinander über verengte Durchgänge (9) verbunden sind, derart, daß abwechselnde Stauchungen der Flüssigkeit in wenigstens einem solchen Durchgang in jeder der beiden unterschiedlichen diametralen Arbeitsrichtungen, nämlich in der oben erwähnten Richtung E und einer anderen Richtung F auftreten, daß die Pole der elektrischen Wicklungen (5_{E}, 5'_{E}, 5_{F}, 5'_{F}) über den Umfang der Oberfläche der ersten Armatur verteilt sind, die teilweise den Spalt begrenzt, derart, daß die Erregung bestimmter Spulen (5_{E}, 5'_{E}) dazu führt, daß der Ring (7) hin- und hergehenden Verschiebungen in der Richtung E in bezug auf die erste Armatur unterworfen wird, und daß die Erregung der anderen Spulen (5_{F}, 5'_{F}) dazu führt, daß der Ring hin- und hergehenden Verschiebungen in der Richtung F in bezug auf die erste Armatur unterliegt, und daß Meßfühler (10, 11), die in unmittelbarer Nähe des Ventils (7) angeordnet sind und Verschiebungen des Ventils in jeweils einer der beiden Richtungen E und F erfassen können und Einrichtungen vorgesehen sind, um mit den Ausgängen der Meßfühler (10, 11) die Erregungen der Spulen (5_{E}, 5'_{E}, 5_{F}, 5'_{F}) zu steuern, die jeweils diesen beiden Richtungen E, F zugeordnet sind.

2. Antischwingungsvorrichtung nach Anspruch 1, dadurch gekennzeichnet, daß die erste rohrförmige Armatur die äußere Armatur (2) ist.

3. Antischwingungsvorrichtung nach einem der vorhergehenden Ansprüche 1 und 2, dadurch gekennzeichnet, daß vier dichte Kammern vorgesehen sind, die in einem Winkel von 90° um die Achse der zweiten Armatur (1 oder 2) angeordnet sind.

4. Antischwingungsvorrichtung nach Anspruch 3, dadurch gekennzeichnet, daß die verengten Durchgänge jeweils paarweise die sich diametral gegenüberliegenden Kammern (A,C; B,D) verbinden.

5. Antischwingungsvorrichtung nach Anspruch 3, dadurch gekennzeichnet, daß die verengten Durchgänge paarweise die winklig nebeneinanderliegenden Kammern (A, B; B, C; C, D; D, A) miteinander verbinden und zwischen dem Verbindungskörper (3) aus elastomerem Material und der gegenüberliegenden Oberflache des Ringe (7) angeordnet sind.

6. Antischwingungsvorrichtung nach einem der vorhergehenden Ansprüche, dadurch gekennzeichnet, daß das polare Teil (4), in dem die Pole erzeugt werden, aus einem axialen Stapel von identischen Scheiben aus ferromagnetischem Material besteht, die innen mit Zahnungen versehen sind.

7. Antischwingungsvorrichtung nach einem der vorhergehenden Ansprüche, dadurch gekennzeichnet, daß der Ring (7) aus einem axialen Stapel von identischen, ferromagnetischen Scheiben (7₁) besteht, wobei der Stapel selbst mit Ausnahme seiner kreisförmigen Fläche, die an den Spalt grenzt, von einem starren Körper (7₂) aus nichtmagnetischem Material umgeben ist.

8. Antischwingungsvorrichtung nach einem der vorhergehenden Ansprüche, dadurch gekennzeichnet, daß die Abdichtung gegenüber der Flüssigkeit zwischen dem Ring (7) und den gegenüberliegenden ebenen, quer verlaufenden Oberflächen (2₄) seiner Führung mittels ringförmiger Dichtungen (12) sichergestellt wird, deren Achse mit der des Ringes zusammenfällt und die in kreisförmigen Rinnen (13) angeordnet sind, die in den vorderen Oberflächen des Ringes ausgenommen sind.

9. Dämpfungseinrichtung, die mit einer Antischwingungsvorrichtung gemäß einem der vorhergehenden Ansprüche versehen ist, dadurch gekennzeichnet, daß sie doppelt vorgesehene Steuereinrichtungen, die es ermöglichen, eine aktive Dämpfung von Schwingungen gemäß jeder der Richtungen E und F sicherzustellen, wobei die Einrichtungen aus Meßfühlern (10, 10', 11, 11') für die Verschiebungen des Ringes (7) in jeweils eine dieser beiden Richtungen bestehen und die Meßfühler in unmittelbarer Nähe dieses Ringes angeordnet sind und Ketten (14-18) enthält, die wenigstens teilweise aufgrund der erfaßten Verschiebungen, die Erregungen der betreffenden Wicklungen (5_{E}, 5'_{E} oder 5_{F}, 5'_{F}) steuern, um diese Verschiebungen aktiv zu dämpfen.
